# EUROPÄISCHE PATENTSCHRIFT

(11) **EP 0 599 047 B1**
(45) Veröffentlichungstag und Bekanntmachung des Hinweises auf die Patenterteilung: **07.01.1998**
(21) Anmeldenummer: 93116833.0
(22) Anmeldetag: 19.10.1993
(51) Int. Cl.: B29C 47/10

(54) **Verfahren zur Bestimmung der von einem Extruder aus einem Aufgabebehälter über die Zeit abgezogenen Materialmenge**
Process for determining the mass flow rate removed by an extruder out of a feed hopper
Procédé pour déterminer le débit de matière retirée par une extrudeuse d'une trémie d'alimentation

(30) Priorität: 23.11.1992 DE 4239307
(43) Veröffentlichungstag der Anmeldung: 01.06.1994
(73) Patentinhaber: Windmöller & Hölscher, D-49516 Lengerich (DE)
(72) Erfinder: Saatkamp, Richard, D-49525 Lengerich (DE)

(56) Entgegenhaltungen:
- EP-A- 0 246 568
- EP-A- 0 505 618
- US-I- B 579 153
- KUNSTSTOFFE. Bd. 80, Nr. 2 , Februar 1990 , MUNCHEN DE Seiten 174 - 177 XP000151157 W.E. FREDE 'Extrudieren mit geregeltem Durchsatz'
- PATENT ABSTRACTS OF JAPAN vol. 14, no. 319 (M-996)(4262) 9. Juli 1990 & JP-A-02 107 426 (SHIKOKU MARUYASU K.K.)

## Beschreibung

Die Erfindung betrifft ein Verfahren zur Bestimmung der von einem Extruder aus einem mit seinem Auslauf in dessen Einlauf mündenden Aufgabebehälter pro Zeiteinheit abgezogenen, nach seinem Gewicht bestimmten Menge von Kunststoffgranulat und zugemischtem Randstreifenmaterial, bei dem das zuzumischende Randstreifenmaterial ständig in einen Vorratsbehälter geleitet und aus diesem intermittierend eine Füllmenge von Granulat und Randstreifenmaterial in den Aufgabebehälter geleitet wird, bei dem der Aufgabebehälter vor oder bei Beginn und nach oder bei Beendigung seiner Füllung gewogen und die Zeit gemessen wird, die zwischen den Füllungen zum Abzug der sich aus den Wägungen ergebenden Materialmenge benötigt wird, und bei dem aus den an den gemessenen Zeiten aus dem Aufgabebehälter abgezogenen Materialmengen der zeitliche Materialdurchsatz errechnet wird.

Extrudern zur Herstellung beispielsweise von Flachfolien wird Kunststoffgranulat und/oder regranulierte Kunststoffabfälle oder Kunststoffschnitzel über zyklonförmige Behälter zugeführt, aus denen das Material dann entsprechend der Förderleistung des Extruders abgezogen wird. Hierbei besteht nun das Bedürfnis, den zeitlichen Materialverbrauch bestimmen zu können, um Aussagen über den Ausstoß des Extruders oder das Metergewicht der extrudierten Kunststoffolien machen zu können. Beispielsweise läßt sich aus dem Metergewicht der extrudierten Kunststoffolien bestimmen, ob die Dicken der extrudierten Folien im gewünschten Toleranzbereich liegen. Diese Bestimmung ist aus wirtschaftlichen Gesichtspunkten wichtig, da das eingesetzte Kunststoffmaterial teuer ist und die Herstellung zu dicker Folien, abgesehen von eventuellen späteren Verarbeitungsschwierigkeiten, zu einer unerwünschten Materialvergeudung führt.

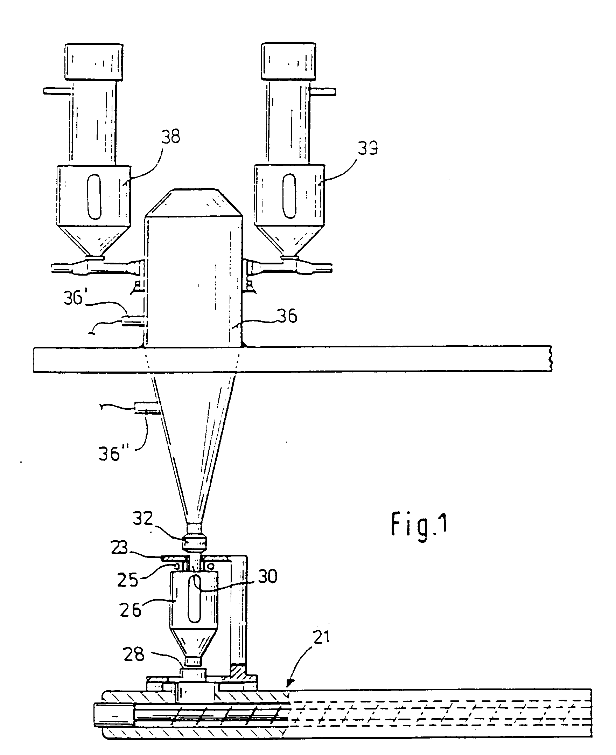

Bei einem anhand der Fig. 1 der Zeichnung erläuterten Verfahren der eingangs angegebenen Art wird einem zyklonförmigen Behälter Granulat unterschiedlicher Kunststoffe über zwei Dosiereinrichtungen 38, 39 zugeführt. Der zyklonförmige Behälter 36 ist mit zwei Initiatoren 36' und 36'' versehen, wobei der obere Initiator 36' dem oberen Füllstand und der untere Initiator 36'' dem unteren Füllstand zugeordnet ist. Die Dosiereinrichtungen 38, 39, beispielsweise aus Vorratsbehältern Granulat abziehende Schneckenförderer, werden eingeschaltet, sobald der Füllstand in dem Behälter 36 den von dem unteren Initator 36'' gemeldeten unteren Füllstand erreicht hat. Die Dosiereinrichtungen werden abgeschaltet, sobald der obere Initiator 36' den oberen Füllstand ermittelt hat. Der Behälter 36 ragt mit seinem Auslaufstutzen berührungsfrei in einen Aufgabebehälter 26 hinein, wobei in dem Auslaufstutzen ein Ventil 32 angeordnet ist, durch das sich dieser gesteuert öffnen und schließen läßt. Der Aufgabebehälter 26 ist über eine Waage 25 an einem mit dem Extruder 21 verbundenen Tragarm 30 aufgehängt. Aus dem Aufgabebehälter 26 fließt kontinuierlich Granulat über die Einlaßöffnung 28 in den Extruder 21. Der Auslaufstutzen des Aufgabebehälters 26 mündet ebenfalls berührungsfrei in die Einlaßöffnung 28. Sobald das Gewicht des Aufgabebehälters 26 samt Füllung einen unteren Wert unterschritten hat, wird das Ventil 32 so lange geöffnet, bis ein voreingestelltes Sollgewicht erreicht ist. Dann wird das Ventil 32 wieder geschlossen. Durch Messung der Zeit, während der die jeweils aufgegebene Füllmenge aus dem Aufgabebehälter 26 abgezogen wird, läßt sich der Durchsatz an Granulat durch den Extruder 21 in kg/Zeit bestimmen.

Schwierigkeiten ergeben sich jedoch bei dieser bekannten Vorrichtung, wenn in den zyklonförmigen Behälter 36 neben Granulat zusätzlich Randstreifenmaterial aufgegeben wird, das beispielsweise durch die randseitige Besäumung der extrudierten Folie gewonnen und in gehäckselter Form zurückgeführt wird. Dieses zurückgeführte Randstreifenmaterial fällt kontinuierlich in etwa gleichbleibender Menge entsprechend der kontinuierlichen Besäumung der extrudiertn Flachfolie an. Beim Betrieb des Extruders werden aber die Granulat in den Behälter 36 aufgebenden Dosiereinrichtungen 38, 39 abgeschaltet, wenn der Füllstandsmesser 36' das Erreichen des oberen Füllstandes meldet. Die Dosiereinrichtungen 38 und 39 bleiben so lange abgeschaltet, bis die Füllstandshöhe in dem Behälter 36 auf die von dem unteren Initiator 36'' erfaßte Füllstandshöhe abgesackt ist. Während dieser Zeit, in der die Dosiereinrichtungen 38, 39 kein Granulat zuführen, wird aber kontinuierlich Randstreifenmaterial in den Behälter 36 aufgegeben, so daß sich oberhalb der absinkenden Granulatschicht eine polsternde Schicht aus Randstreifenmaterial bildet. In den Behälter 36 kann somit das Randstreifenmaterial nicht gleichmäßig mit dem zugeführten Granulat gemischt werden, so daß sich entsprechend der unterschiedlichen Schüttdichte und der unterschiedlichen Materialform ein unterschiedliches Einzugsverhalten der Schnecke und, daraus resultierend, unterschiedliche Förderraten ergeben.

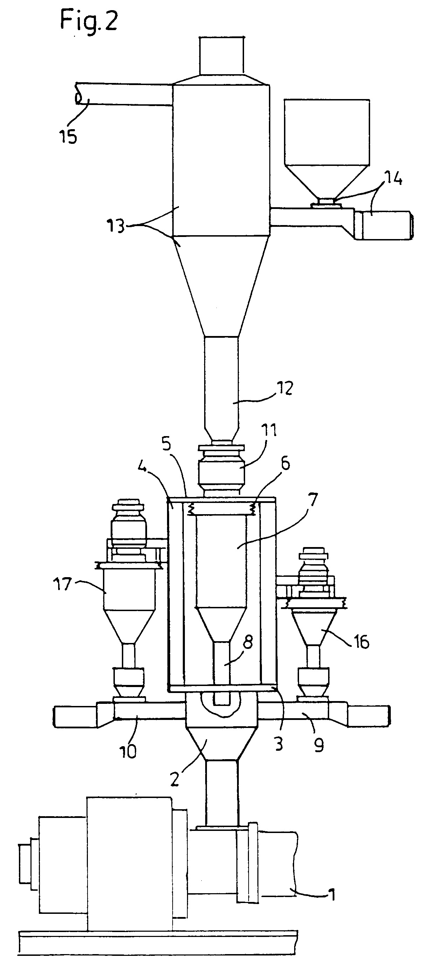

Diese Fig. 1 entspricht der Fig. 2 der EP-A 0 505 618. Letztere zeigt in Fig. 1 einen fest installierten Behälter 16, der lediglich als Mischbehälter für Granulat und Randstreifenmaterial dient. Im Behälter 16 wird kein Gut gespeichert. Vielmehr rieselt das gemischte Material ständig in einen Zwischenbehälter 13, der an einer Wiegeeinrichtung 14 aufgehängt ist. Unterhalb des Zwischenbehälters 13 ist der eigentliche Aufgabebehälter 6 angeordnet, der an einer Wiegeeinrichtung 5 aufgehängt ist. Das den Zwischenbehälter 13 nach unten abschließende Ventil wird in Abhängigkeit des Granulatgewichts im Aufgabebehälter 6 gesteuert. Die Zuführrate des Granulatstromes in den Mischbehälter 16 wird dabei so eingeregelt, daß das Gewicht des im Behälter 13 und im Behälter 6 befindlichen Mischgutes ständig eine zuvor festgelegte obere Gewichtsgrenze beibehält. Eine solche in Fig. 1 dargestellte Einrichtung läßt sich aber nur dann sinnvoll einsetzen, wenn kleine Mengen zu verarbeiten sind, weil dann nämlich die Behälter 16, 13 und 6 relativ klein ausgebildet sein können. Müssen jedoch große Mengen verarbeitet werden, ist es erforderlich, auch die Behälter entsprechend hoch auszubilden, so daß sich daraus eine insgesamt große Bauhöhe ergibt. Aber nur in seltenen Fällen stehen in den Fabrikhallen die erforderlichen Raumhöhen zur Verfügung.

Aufgabe der Erfindung ist es daher, ein Verfahren der Eingangs angegebenen Art vorzuschlagen, das auch dann einen gleichmäßigen Materialeinzug in den Extruder gewährleistet, wenn dem zyklonförmigen Behälter neben Granulat Randstreifenmaterial zugeführt wird und nur eine geringe Bauhöhe für die zur Durchführung des Verfahrens erforderliche Vorrichtung zur Verfügung steht.

Erfindungsgemäß wird diese Aufgabe bei einem Verfahren der gattungsgemäßen Art dadurch gelöst, daß eine kontinuierliche Zufuhr von Granulat mit im wesentlichen gleicher Förderrate in den Vorratsbehälter derart geregelt wird, daß in diesem bei jeder Einleitung von Granulat mit zugemischtem Randstreifenmaterial in den Aufgabebehälter die zu wiegende Füllmenge bereitgehalten wird. Nach dem erfindungsgemäßen Verfahren wird somit der Vorratsbehälter in etwa im gleichen Maße gefüllt, wie sich der Aufgabebehälter entleert, so daß nach jeder Öffnung und Entleerung des Vorratsbehälter in diesen gleiche zu wiegende Füllmengen eingeleitet werden und sich die nächste Füllmenge mit gleichbleibend kontinuierlicher Zufuhr von Randstreifenmaterial und Granulat in dem Vorratsbehälter wieder ansammeln kann. Sollte sich eine Unter- oder Überfüllung des Aufgabebehälters ergeben, was aus den Wägungen ermittelt wird, wird durch entsprechende Erhöhung oder Verringerung der Zuführungsgeschwindigkeit des Granulats die einen störungsfreien Betrieb gewährleistende Füllmenge eingestellt. Die Geschwindigkeitsänderungen bei der Zuführung des Granulats während der Einstellung auf die richtige Füllmenge sind so gering, daß sich störend bemerkbare Änderungen des Mischungsverhältnisses zwischen dem Granulat und dem Randstreifenmaterial nicht ergeben.

Zweckmäßigerweise werden für den Aufgabebehälter eine obere und eine untere Gewichtsgrenze bestimmt, wobei nach Einleitung der Füllmenge des Vorratsbehälters in den Aufgabebehälter der Auslauf des Vorratsbehälters gesperrt und wieder geöffnet wird, wenn aus dem Aufgabebehälter das Material bis zu der unteren Gewichtsgrenze abgezogen worden ist, wobei nach jeder Entleerung der Füllmenge des Vorratsbehälters deren Gewicht mit der oberen Gewichtsgrenze verglichen und bei Abweichungen die Granulatzufuhr derart erhöht oder verringert wird, daß nach jeder Entleerung des Vorratsbehälters die Füllmenge in dem Aufgabebehälter etwa die obere Gewichtsgrenze erreicht. Zu Beginn des Betriebes ist in dem Vorratsbehälter zunächst eine Füllmenge bereitzustellen, die der Soll-Füllmenge entspricht.

Sollen dem Extruder Granulate unterschiedlicher Kunststoffe zugeführt werden, kann in den Einlauftrichter des Extruders mindestens ein weiteres Granulat-Zuführungsrohr münden, mit dem in diesen gewogene Mengen zuzumischenden Granulats mit vorbestimmtem, gleichen Längenfluß eingespeist werden. Der Mengenfluß dieses zuzumischenden Granulats wird in bekannter Weise ermittelt. Selbstverständlich verringert sich entsprechend dem zuzumischenden Granulat die aus dem Aufgabebehälter kontinuierlich abgezogene Materialmenge.

Ein Ausführungsbeispiel der Erfindung wird nachstehend anhand der Fig. 2 näher erläutert, die eine Seitenansicht eines Extruders mit der Einlauföffnung des Extruders vorgeschaltetem, an eine Wiegeeinrichtung angehängten Aufgabebehälter und einen in diesen mündenden Vorratsbehälter in schematischer Darstellung zeigt.

Der nur teilweise dargestellte Extruder 1 weist einen fest aufgesetzten Einlaufstutzen 2 auf. Im Einfüllbereich des Einlaufstutzens 2 ist auf diesen eine mit einer Öffnung versehene Platte 3 aufgesetzt, mit der nach oben ragende Säulen 4 fest verbunden sind. Diese Säulen 4 sind an ihren oberen Enden miteinander wiederum durch eine Platte 5 verbunden, die ebenso wie die Platte 3 eine Durchgangsöffnung aufweist. An der Platte 5 ist über Wägezellen 6 ein Aufgabetrichter 7 aufgehängt, dessen Auslauf 8 in den Einlaufstutzen 2 mündet, diesen aber nicht berührt. In den Einlaufstutzen 2 münden zwei weitere Zuführungen 9 und 10, die der Zumischung weiteren Kunststoffgranulats dienen. Die obere, die Säulen 4 miteinander verbindende Platte 5 tragt ein Schließventil 11, das fest mit einem Vorratsbehälter 12 verbunden ist. Dieser Vorratsbehälter 12 ist Teil eines zyklonartigen Behälters 13, in den über eine Fördereinrichtung 14 der zu verarbeitende Rohstoff zugeführt wird. Neben dieser Zuführeinrichtung 14 ist eine weitere Fördereinrichtung 15 vorgesehen, über welche zerhäckselte Randstreifen in den Zyklon 13 gelangen. Diese Randstreifen werden ständig zugeführt und vermischen sich mit dem ständig über die Fördereinrichtung 14 zugeführten Material.

Die Antriebseinrichtung für die Fördereinrichtung 14 wird derart geregelt, daß die pro Zeiteinheit abgegebene Materialmenge der Menge entspricht, die pro Zeiteinheit vom Extruder aus dem Aufgabebehälter 7 abgezogen wird. Zu diesem Zweck wird zunächst einmal bei offenem Schließventil 11 gemischtes Material in den Aufgabebehälter 7 eingeleitet. Dieser füllt sich bis zu einer zuvor bestimmten oberen Gewichtsmarke, woraufhin dann das Schließventil 11 geschlossen wird. Aus dem Aufgabebehälter 7 wird nun während des Betriebes von dem Extruder im Zeitraum x eine ganz bestimmte Materialmenge abgezogen. In derselben Zeit füllt sich auch der Vorratsbehälter 12 mit frischem Material. Ist aus dem Aufgabebehälter 7 gemischtes Material bis zu einer unteren, vorbestimmten Gewichtsmarke abgezogen worden, wird das Schließventil 11 geöffnet, und das gesamte im Vorratsbehälter 12 befindliche gemischte Material strömt in den Aufgabetrichter 7. Das in den Aufgabetrichter 7 eingeflossene Material wird gewogen und mit der Menge verglichen, die durch die obere Gewichtsmarke vorgegeben war. Stimmen Soll- und Istwert überein, ist dies ein Zeichen dafür, daß die Fördereinrichtung 14 genau eingestellt ist, und zwar im Verhältnis zu dem zugeführten Randstreifenmaterial. Zeigt die Wägung, daß das Gewicht des in den Aufgabebehälter 7 eingeströmten gemischten Material zu gering zu oder hoch ist, wird über einen Regler die Drehzahl der Zuführungseinrichtung 14 entsprechend geändert. Während dieser Vergleichsmessung kann das Schließventil geschlossen sein, es kann aber auch während der kurzen Zeit noch offenstehen. Zumindest wird nach dem Vergleichsvorgang das Schließventil 11 wieder geschlossen, und der zuvor beschriebene Vorgang wiederholt sich in entsprechender Weise.

Zusätzlich können dem Einlaufstutzen 2 über Zuführungen 9 und 10 weitere zuzumischende Materialien zugeführt werden, wobei dies über die Wägetrichter 16 und 17 erfolgt, die ebenso wie der Aufgabebehälter 7 über Wägezellen aufgehängt sind.

## Patentansprüche

1. Verfahren zur Bestimmung der von einem Extruder (1) aus einem mit seinem Auslau£ (8) in dessen Einlauf (2) mündenden Aufgabetrichter (7) pro Zeiteinheit abgezogenen, nach seinem Gewicht bestimmten Menge von Kunststoffgranulat und zugemischtem Randstreifenmaterial,
bei dem das zuzumischende Randstreifenmaterial ständig in einen Vorratsbehälter (12) geleitet, und aus diesem intermittierend eine Füllmenge von Granulat und Randstreifenmaterial in den Aufgabebehälter (7) geleitet wird,
bei dem der Aufgabebehälter (7) vor oder bei Beginn und nach oder bei Beendigung seiner Füllung gewogen und die Zeit gemessen wird, die zwischen den Füllungen zum Abzug der sich aus den Wägungen ergebenden Materialmenge benötigt wird, und
bei dem aus den in den gemessenen Zeiten aus dem Aufgabebehälter (7) abgezogenen Materialmengen der zeitlich Materialdurchsatz errechnet wird,
**dadurch gekennzeichnet,**
daß eine kontinuierliche Zufuhr von Granulat mit im wesentlichen gleicher Förderrate in den Vorratsbehälter (12) derart geregelt wird, daß in diesem bei jeder Einleitung von Granulat mit zugemischtem Randstreifenmaterial in den Aufgabebehälter (7) die zu wiegende Füllmenge bereitgehalten wird.

2. Verfahren nach Anspruch 1, dadurch gekennzeichnet, daß für den Aufgabebehälter (7) eine obere und eine untere Gewichtsgrenze bestimmt werden, daß nach Einleitung der Füllmenge des Vorratsbehälters (12) in den Aufgabebehälter (7) der Auslauf (Ventil 11) des Vorratsbehälters (12) gesperrt und wieder geöffnet wird, wenn aus dem Aufgabebehälter (7) das Material bis zu der unteren Gewichtsgrenze abgezogen worden ist, daß nach jeder Entleerung der Füllmenge des Vorratsbehälters (12) deren Gewicht mit der oberen Gewichtsgrenze verglichen und bei Abweichungen die Granulatzufuhr derart erhöht oder verringert wird, daß nach jeder Entleerung des Vorratsbehälters (12) die Füllmenge in dem Aufgabebehälter (7) etwa die obere Gewichtsgrenze erreicht.

3. Verfahren nach Anspruch 1 oder 2, dadurch gekennzeichnet, daß in den Einlauftrichter (2) des Extruders (1) mindestens ein weiteres Granulat-Zuführungsrohr (9 bzw. 10) mündet, mit dem in diesen gewogene Mengen zuzumischenden Granulats mit vorbestimmtem, gleichen Materialfluß eingespeist werden.

## Claims

1. A method for determining the mass flow rate of synthetic granulated material and admixed selvedge material, drawn off per unit time and determined according to its weight, by an extruder (1) out of a feed hopper (7) leading with its outlet (8) into the inlet (2) of said extruder,
wherein the selvedge material to be admixed is constantly passed into a stock container (12), and a fill of granulated material and selvedge material is intermittently passed therefrom into the feed hopper (7),
wherein the feed hopper (7) is weighed before or at the start, and after or on termination of its filling, and the time is measured which is required between the fillings for drawing off the mass of material resulting from the weighing operations, and
wherein the temporal flow rate of the material is calculated from the quantities of material drawn off from the feed hopper (7) in the measured periods,
**characterized in that**
the continuous feeding of granulated material at a substantially uniform delivery rate into the stock container (12) is regulated in such a way that the mass of the fill to be weighed is provided therein on each introduction of the granulated material with the admixed selvedge material into the feed hopper (7).

2. A method according to claim 1, characterized in that an upper and a lower weight limit are determined for the feed hopper (7); that, after the mass of the fill of the stock container (12) has been introduced into the feed hopper (7), the outlet (valve 11) of the stock container (12) is shut and is reopened when the material has been drawn out of the feed hopper (7) down to the lower weight limit; that, after each emptying of the mass of the fill of the stock container (12), the weight of the fill is compared with the upper weight limit, and in the case of deviations the feeding of the granulated material is increased or reduced in such a way that, after each emptying of the stock container (12), the mass of the fill in the feed hopper (7) approximately attains the upper weight limit.

3. A method according to claim 1 or 2, characterized in that at least one further feeder pipe (9 or 10) for the granulated material leads into the inlet funnel (2) of the extruder (1), by means of which pipe she quantities of the granulated material to be admixed and weighed therein are fed in at a predetermined uniform flow rate of the material.

## Revendications

1. Procédé pour déterminer la quantité de granulat de matière synthétique déterminée selon son poids retirée par une extrudeuse par unité de temps d'une trémie d'alimentation (7) débouchant par sa sortie (8) dans l'entrée (2) de celle-ci et de matériau de bande de bord mélange, où le matériau de bande de bord à ajouter est conduit continuellement dans un réservoir de stockage (12), et de celui-ci une quantité de remplis sage de granulat et de matériau de bande de bord est conduite par intermittence dans la trémie d'alimentation (7), où la trémie d'alimentation (7) est pesée avant ou au début ou après ou à la fin de son remplissage et le temps est, mesuré qui est requis entre les remplis sages pour le retrait de la quantité de matériau résultant des pesées et où on calcule à partir des quantités de matériau retirées pendant les temps mesurés de la trémie d'alimentation (7) le débit de matériau dans le temps, caractérisé en ce qu'une amenée continue de granulat d'une vitesse de transport essentiellement constante dans le réservoir de stockage (12) est réglée de telle sorte que dans celui-ci à chaque introduction du granulat avec lequel est mélangé du matériau de bande de bord dans la trémie d'alimentation (7), la quantité de remplissage à peser soit disponible.

2. Procédé selon la revendication 1 caractérisé en ce qu'on détermine pour la trémie d'alimentation (7) des limites de poids supérieure et inférieure en ce qu'après l'introduction de la quantité de remplissage du réservoir de stockage (12) dans la trémie d'alimentation (7), la sortie (vanne 11) du réservoir de stockage (12) est bloquée et de nouveau ouverte lorsqu'il a été retiré de la trémie d'alimentation (7) le matériau jusqu'à la limite de poids inférieure, en ce qu'après chaque vidage de la quantité de remplissage du réservoir de stockage (12) le poids de celle-ci est comparé avec la limite de poids supérieure et, lorsqu'il y a des écarts l'amenée du granulat est augmentée ou diminuée de telle sorte qu'après chaque vidage du réservoir d'alimentation (12), la quantité de remplissage dans la trémie d'alimentation (7) atteint à peu près la limite de poids supérieure.

3. Procédé selon la revendication 1 ou 2 caractérisé en ce qu'au moins un tube supplémentaire d'amenée de granulat (9 et, respectivement 10) débouche dans la trémie d'entrée (2) de l'extrudeuse (1) au moyen duquel sont introduites des quantités pesées de granulat à ajouter pour le mélange suivant un flux de matériau égal prédéterminé.
